# EUROPEAN PATENT SPECIFICATION

(11) **EP 0 748 006 B1**
(45) Date of publication and mention of the grant of the patent: **25.10.2000**
(21) Application number: 96201463.5
(22) Date of filing: 25.05.1996
(51) Int. Cl.: H01R 27/00, H02G 3/12

(54) **System for mechanical and electrical connection between electronic devices to be integrated into flush-mounted electrical equipment items**
Anordnung zur mechanischen und elektrischen Verbindung zwischen elektronischen, in Einbaugeräten integrierten Baugruppen
Dispositif pour la connexion mécanique et électrique entre des groupes électroniques intégrés dans des équipements électriques encastrés

(30) Priority: 07.06.1995 IT MI951188
(43) Date of publication of application: 11.12.1996
(73) Proprietor: BTICINO S.P.A., 20154 Milano (IT)
(72) Inventor: Santini, Ernesto, 28060 Sozzago (Novara) (IT)
(74) Representative: Fusina, Gerolamo

(56) References cited:
- EP-A- 0 377 093
- GB-A- 2 239 546
- US-A- 4 778 399

## Description

This invention relates to a system for mechanical and electrical connection between generic electronic communication devices and electronic devices of specific function which are to be integrated into flush-mounted electrical equipment items for domestic use.

The increasing evolution of electronic communication systems using bus communication lines (along which digital signals corresponding to information and data are transferred) presents to an increasingly serious degree the problem of connecting and integrating electronic devices of specific function (for example thermostats, programmers, electronic control units, small electronic processors) into the system.

Said electronic devices are currently formed in a single container containing both the elements for supporting communication between the device and digital bus (access doors, communication control, control unit), and the electronic circuit which implements the specific function, or alternatively in physically separate containers connected by connection cables (in this case the specific functions requested and the communication process cannot be mutually coordinated).

If reference is made to domestic electronic devices for flush-mounting, the problem is even more evident because known devices are generally of single-block type.

For example, GB-A-2 239 546 discloses an integrated anti-theft system which consists of different modular components placed alongside each other under a plate and peripheral components being flush-mounted with other devices like electrical switches. The peripheral components (alarm indicator, micro contacts, electronic keyboard) are arranged to transmit information to a central unit.

However, such electronic devices are directed to one specific electronic function or consist of communication gates of generic type and hence, as such, cannot be coordinated with the modular lines of flush-mounted equipment items, either in terms of homogeneity between bus communication and specific electronic function, or in terms of integration with said flush-mounted modular lines.

This gives rise to the drawback of not being able to propose and separately install a specific electronic circuit and generic electronic communication devices.

Moreover, if the electronic part relative to bus communication is physically separate from that specific function, said communication part cannot be used as a network addressable unit of generic connector type integrated into the modular lines of flush-mounted electrical equipment items for domestic use.

Finally, for the aforesaid reasons it is not possible to use a single electronic part reserved for bus communication or an assembly of different functional modules housed in the same flush-mounting box.

An object of the present invention is therefore to indicate a system for mechanical and electrical connection between electronic devices to be integrated into flush-mounted electrical equipment items for domestic use, which obviates the aforesaid drawbacks, by allowing wide freedom of installation of the functional electronic and communication parts (joint or separate installation, further connections to electronic equipment items for the simultaneous use of several coupled devices, possibility of network addressing).

A further object of the present invention is to provide a system for mechanical and electrical connection between electronic devices to be integrated into flush-mounted electrical equipment items for domestic use using standard circuit techniques, unique mechanical and electrical arrangements, and aesthetically rational and elegant configurations.

A further object of the invention is to provide a system for mechanical and electrical connection between electronic devices which is of simple and low-cost construction, without the use of complex or costly techniques.

These and further objects are attained by a system for mechanical and electrical connection between electronic devices to be integrated into flush-mounted electrical equipment items in accordance with claim 1. Further preferred embodiments are defined in the subclaims 2 to 5.

Advantageously, the system for mechanical and electrical connection between electronic devices comprises a plate for flush-mounted electrical equipment items (mounted by means of the usual accessories defined for this), housing a series-connected electronic device (mechanically compatible with the modular lines of the plate), which presents connectors for data transfer and for powering, which can be used for trailing-cable connection to semifixed external equipment items, in a like manner to the connection of a telephone to a flush-mounted socket.

A plug, designed to engage the socket of the series-connected electronic device, is connected by connection cables to other electronic equipment items, which is also harmonized into a unique mechanical and aesthetic arrangement.

A series of other electronic equipment items implementing different specific functions and characterised by a container provided with a connector may be coupled rigidly and ergonomically to the socket provided in the series-connected electronic device, and may occupy the recess in the series-connected electronic device.

The series-connected electronic device and the other electronic circuit of the equipment items which implement specific functions can be housed in separate containers, although harmonized into a unique mechanical and aesthetic arrangement, allowing the widest installational freedom.

Moreover the series-connected electronic device is also usable as a network addressable unit provided with a rigid and ergonomic socket for connection by cable to electronic equipment items external to the system.

Finally, a single series-connected electronic device can present to the user a plurality of sockets, allowing the simultaneous use of several coupled electronic devices or of several plugs or a combination thereof, so as to distribute the cost of the communication circuits among several users.

Further objects and advantages of the present invention will be apparent from the ensuing description and the accompanying drawings, which are provided by way of non-limiting example and in which:
Figure 1 is an exploded schematic view of the mechanical and electrical connection system of the present invention;
Figure 2 is a schematic front view of the plate of a mechanical and electrical connection system, provided with a double data and power socket compared with the system of Figure 1;
Figure 3 shows an electronic device for transferring information and data, which is housed within the plate of the mechanical and electrical connection system;
Figure 4 represents a plug connected to the electronic device of Figure 3;
Figure 5 shows an electronic equipment item of specific function connected to the electronic device of Figure 3.

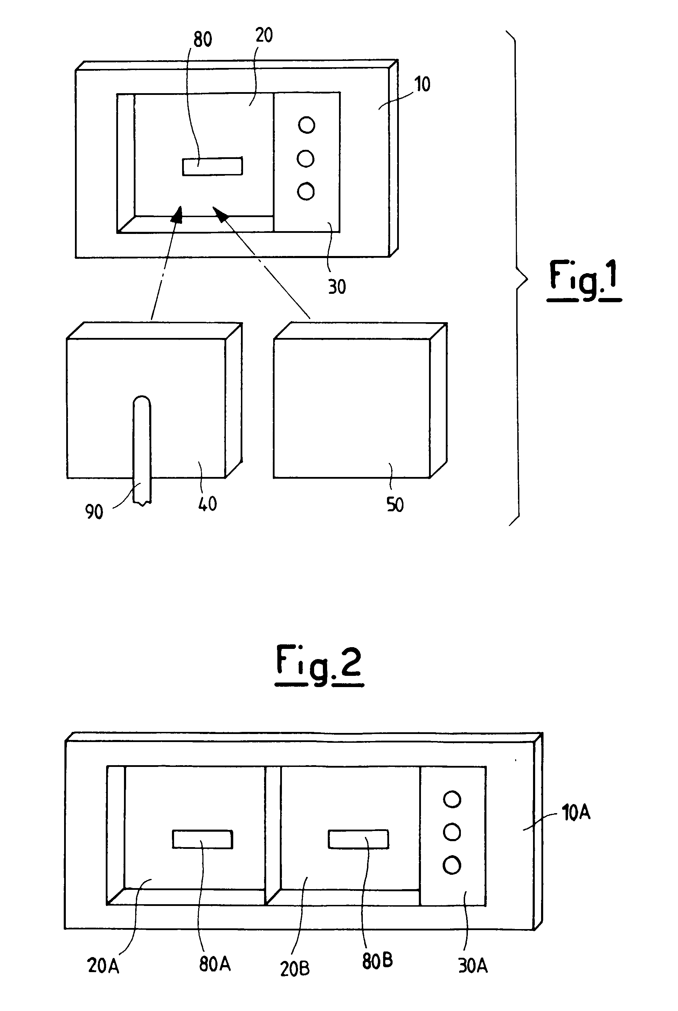

In Figures 1 and 2, the reference numerals 10, 10A indicate a flush-mounting plate housing a flush-mounted electrical equipment item 30, 30A and one or more series-connected electronic devices 20, 20A, 20B able to transfer information and data along digital communication buses.

The series connected electronic devices 20, 20A, 20B are provided with sockets 80, 80A, 80B for data transfer and powering. Said sockets 80, 80A, 80B can be connected to plugs 40 provided with cable 90 for connection to other electronic equipment items (not shown), or can house other electronic devices 50 of specific function.

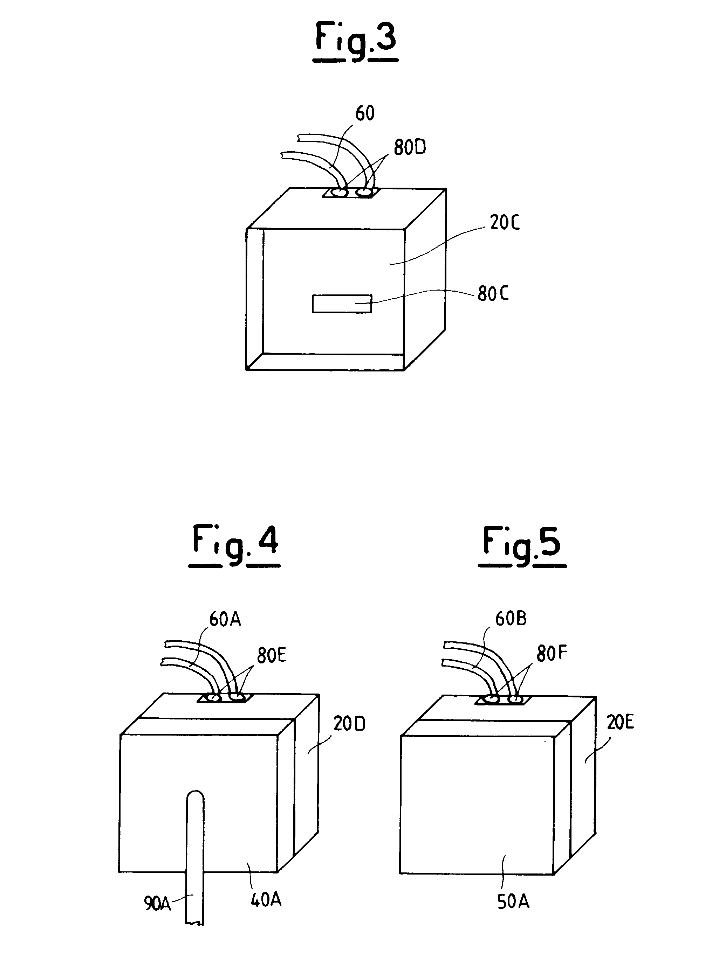

In Figures 3, 4 and 5, the reference numerals 20C, 20D, 20E indicate three series-connected electronic devices arranged to transfer information and data along digital communication buses 60, 60A, 60B.

Connection between each series-connected electronic device 20C, 20D, 20E and each bus 60, 60A, 60B is obtained by the connectors 80D, 80E, 80F respectively.

The reference numeral 80C indicates a data transfer and powering socket, 40A indicates a plug provided with connection cable 90A for connection to other electronic equipment items, and 50A indicates an other electronic device of specific function.

The connection system provides the facility for inserting, into flush-mounted electrical equipment items 30, 30A for domestic use (generally of modular type), plugs 40, 40A for connecting electronic equipment items external to the system (by connection cables 90, 90A) and/or electronic devices 50, 50A of specific function.

This connection enables information and data to be transferred from the electronic equipment items external to the system or from the other electronic devices 50, 50A of specific function, to the communication buses 60, 60A, 60B via the series-connected electronic devices 20, 20A, 20B, 20C, 20D, 20E (inserted in a variable number into the plates 10, 10A of the flush-mounted electrical equipment items 30, 30A for domestic use).

This is made possible by the connection between the sockets 80, 80A, 80B, 80C and the plugs 40, 40A and/or other electronic devices 50, 50A.

The characteristics of the system for mechanical and electrical connection between electronic devices to be integrated into flush-mounted electrical equipment items according to the present invention are apparent from the aforegoing description, as are its advantages.

In particular, these are represented by:
- flexibility, simplicity and rapidity of installation of the system electronic devices;
- versatility of system use on connected peripheral electronic units, which are used simultaneously;
- easy electrical and mechanical integration with other electronic devices and electrical user safety devices;
- rationality and elegance of the aesthetic arrangement;
- unit nature of the system structure, by which the series-connected electronic devices used can be integrated into modular or flush-mounted equipment items;
- low cost compared with connection systems of the known art.

## Claims

1. A system for mechanical and electrical connection between electronic devices to be integrated into flush-mounted electrical equipment items (30, 30A), of the type comprising at least one plate (10, 10A) housing at least one flush-mounted electrical equipment item (30, 30A) and at least one series-connected electronic device (20, 20A, 20B, 20C, 20D, 20E), which is arranged to transfer information and/or data, via a plurality of connectors (80D, 80E, 80F) along at least one communication line (60, 60A, 60B), said electronic device (20, 20A, 20B, 20C, 20D, 20E) being mechanically compatible with said flush-mounted electrical equipment item (30, 30A) and with the installation accessories provided for it, and being provided with at least one socket (80, 80A, 80B, 80C) for information and/or data transfer and for power, said socket (80, 80A, 80B, 80C) being connected to at least one plug (40, 40A) connected to connection cables (90, 90A), or said socket (80, 80A, 80B, 80C) being connected to at least one other electronic device (50, 50A) of specific function, or said socket (80, 80A, 80B, 80C) being connected to at least one plug (40, 40A) connected to mutually coupled electronic equipment items external to said system, to enable said electronic equipment items or a plurality of said plugs (40, 40A) or at least one combination of said electronic equipment items and said plugs (40, 40A) to be used simultaneously, the surface of said series-connected electronic device (20, 20A, 20B, 20C, 20D, 20E) carrying said socket (80, 80A, 80B, 80C) is set back from the outer surface of said flush-mounted electrical equipment item (30, 30A) and
characterised in that the visible surface of said plug (40, 40A), when inserted into the socket (80, 80A, 80B, 80C), is parallel and aligned with said plate (10, 10A) and with said outer surface of said flush-mounted electrical equipment item (30, 30A), with the exception of finger-tip gripping points, used for insertion and withdrawal.

2. A mechanical and electrical connection system as claimed in claim 1, characterised in that said series-connected electronic device (20, 20A, 20B, 20C, 20D) for information and/or data communication and said other electronic device (50, 50A) of specific function are housed in separate containers.

3. A mechanical and electrical connection system as claimed in claim 1, characterised in that said series-connected electronic device (20, 20A, 20B, 20C, 20D, 20E) is used as a network addressable unit provided with said at least one socket (80, 80A, 80B, 80C) for connection, via cables (90, 90A) and plugs (40, 40A), to said mutually coupled electronic equipment items external to said system.

4. A mechanical and electrical connection system as claimed in claim 1, characterised in that the single series-connected electronic device (20,20A, 20B,20C,20D, 20E) comprises a plurality of sockets (80, 80A, 80B, 80C), to enable said mutually coupled electronic equipment items external to the system or a plurality of said plugs (40, 40A) or at least one combination of said electronic equipment items and said plugs (40, 40A) to be used simultaneously.

5. A mechanical and electrical connection system as claimed in claim 1, characterised in that said flush-mounted electrical equipment items (30, 30A), said plates (10, 10A), said series-connected electronic devices (20, 20A, 20B, 20C, 20D, 20E), said sockets (80, 80A, 80B, 80C), said plugs (40, 40A) and said other electronic devices (50, 50A) of specific function are other equipment items of modular type for domestic use.

## Patentansprüche

1. System zur mechanischen und elektrischen Verbindung zwischen in elektrische Unterputz-Baugruppen (30, 30A) zu integrierende elektronischen Geräten, mit mindestens einer Platte (10, 10A) zur Aufnahme mindestens einer elektrischen Unterputz-Baugruppe (30, 30A) und mindestens einem serien-geschalteten elektronischen Gerät (20, 20A, 20B, 20C, 20D, 20E) zur Informations- und/oder Daten-Übertragung über mehrere Stecker (80D, 80E, 80F) und mindestens eine Verbindungsleitung (60, 60A, 60B), wobei das elektronische Gerät (20, 20A, 20B, 20C, 20D, 20E) mit der elektrischen Unterputz-Baugruppe (30, 30A) und den dafür vorgesehenen Einbauteilen mechanisch kompatibel und mit mindestens einer Buchse (80, 80A, 80B, 80C) zur Informations- und/oder Daten-Übertragung sowie zur Versorgung versehen ist, wobei die Buchse (80, 80A, 80B, 80C) mit mindestens einem an Verbindungskabel (90, 90A) angeschlossenem Stecker (40, 40A) verbunden ist, oder wobei die Buchse (80, 80A, 80B, 80C) mit mindestens einem weiteren elektronischen Gerät (50, 50A) spezieller Funktion verbunden ist, oder die Buchse (80, 80A, 80B, 80C) mit mindestens einem Stecker (40, 40A) verbunden ist, der an miteinander gekoppelte, bezüglich des Systems externe elektronische Baugruppen angeschlossen ist, so daß sich die elektronischen Baugruppen oder mehrere der Stecker (40, 40A) oder mindestens eine Kombination aus den elektronischen Baugruppen und den Steckern (40, 40A) gleichzeitig benutzen lassen, wobei die mit der Buchse (80, 80A, 80B, 80C) versehene Fläche des serien-geschalteten elektronischen Geräts (20, 20A, 20B, 20C, 20D, 20E) gegenüber der Außenfläche der elektrischen Unterputz-Baugruppe (30, 30A) zurückgesetzt ist, dadurch **gekennzeichnet**, daß die sichtbare Fläche des Steckers (40, 40A) in dem in die Buchse (80, 80A, 80B, 80C) eingesteckten Zustand bezüglich der Platte (10, 10A) und der Außenfläche der elektrischen Unterputz-Baugruppe (30, 30A) mit Ausnahme von zum Einbauen und Herausziehen dienenden Fingerspitzen-Griffstellen parallel und fluchtend verläuft.

2. Mechanisches und elektrisches Verbindungssystem nach Anspruch 1, dadurch gekennzeichnet, daß das serien-geschaltete elektronische Gerät (20, 20A, 20B, 20C, 20D) zur Informations- und/oder Daten-Übertragung und das weitere elektronische Gerät (50, 50A) spezieller Funktion in getrennten Gehäusen untergebracht sind.

3. Mechanisches und elektrisches Verbindungssystem nach Anspruch 1, dadurch gekennzeichnet, daß das serien-geschaltete elektronische Gerät (20, 20A, 20B, 20C, 20D, 20E) als netz-adressierbare Einheit dient, die mit der mindestens einen Buchse (80, 80A, 80B, 80C) zum Anschluß an die bezüglich des Systems externen, miteinander gekoppelten elektronischen Baugruppen über Kabel (90, 90A) und Stecker (40, 40A) versehen ist.

4. Mechanisches und elektrisches Verbindungssystem nach Anspruch 1, dadurch gekennzeichnet, daß das einzelne serien-geschaltete elektronische Gerät (20, 20A, 20B, 20C, 20D, 20E) mehrere Buchsen (80, 80A, 80B, 80C) aufweist, so daß sich die bezüglich des Systems externen, miteinander gekoppelten elektronischen Baugruppen oder mehrere der Stecker (40, 40A) oder mindestens eine Kombination aus den elektronischen Baugruppen und den Steckern (40, 40A) gleichzeitig benutzen lassen.

5. Mechanisches und elektrisches Verbindungssystem nach Anspruch 1, dadurch gekennzeichnet, daß die elektrischen Unterputz-Baugruppen (30, 30A), die Platten (10, 10A), die serien-geschalteten elektronischen Geräte (20, 20A, 20B, 20C, 20D, 20E), die Buchsen (80, 80A, 80B, 80C), die Stecker (40, 40A), die weiteren elektronischen Geräte (50, 50A) spezieller Funktion weitere modulare Baugruppen für Heimzwecke sind.

## Revendications

1. Système de connexion mécanique et électrique entre des dispositifs électroniques devant être intégrés dans des articles d'équipement électrique encastrés (30, 30A), du type comprenant au moins une plaque (10, 10A) logeant au moins un article d'équipement électrique (30, 30A) et au moins un dispositif électronique monté en série (20, 20A, 20B, 20C, 20D, 20E) qui est agencé afin de pouvoir transférer des informations et/ou des données par l'intermédiaire d'une pluralité de connecteurs (80D, 80E, 80F) le long d'au moins une ligne de communication (60, 60A, 60B), ledit dispositif électronique (20, 20A, 20B, 20C, 20D, 20E) étant mécaniquement compatible avec ledit article d'équipement électrique encastré (30, 30A) ainsi qu'avec les accessoires d'installation fournis pour ce dernier, et étant équipé d'au moins une prise (80, 80A, 80B, 80C), pour le transfert des informations et/ou des données et l'alimentation, ladite prise (80, 80A, 80B, 80C) étant connectée à au moins une fiche (40, 40A) reliée à des câbles de connexion (90, 90A) ou ladite prise (80, 80A, 80B, 80C) étant reliée à au moins un autre dispositif électronique (50, 50A) de fonction spécifique ou ladite prise (80, 80A, 80B, 80C) étant reliée à au moins une fiche (40, 40A) connectée à des articles d'équipement électrique couplés les uns aux autres et situés à l'extérieur dudit système pour permettre auxdits articles d'équipement électronique ou à une pluralité desdites fiches (40, 40A) ou au moins à une combinaison desdits articles d'équipement électronique et desdites fiches (40, 40A) d'être utilisés simultanément, la surface dudit dispositif électronique monté en série (20, 20A, 20B, 20C, 20D, 20E) supportant ladite prise (80, 80A, 80B, 80C) est repositionnée à partir de la surface extérieure dudit article d'équipement électrique encastré (30, 30A) et caractérisé en ce que la surface visible de ladite fiche (40, 40A), lorsqu'elle est insérée dans la prise (80, 80A, 80B, 80C) est parallèle et alignée avec ladite plaque (10, 10A) et avec ladite surface extérieure dudit article d'équipement électrique encastré (30, 30A), à l'exception de points de prise pour les doigts utilisés pour l'insertion et le retrait du dispositif.

2. Système de connexion mécanique et électrique selon la revendication 1, caractérisé en ce que ledit dispositif électronique monté en série (20, 20A, 20B, 20C, 20D) pour la communication des informations et/ou des données et ledit autre dispositif électronique (50, 50A) de fonction spécifique sont logés dans des conteneurs séparés.

3. Système de connexion électrique et mécanique selon la revendication 1, caractérisé en ce que ledit dispositif électronique monté en série (20, 20A, 20B, 20C, 20D, 20E) est utilisé en tant qu'unité adressable par le réseau équipée de ladite au moins une prise (80, 80A, 80B, 80C) pour être connecté, par l'intermédiaire de câbles (90, 90A) et de fiches (40, 40A), auxdits articles d'équipement électronique reliés les uns aux autres et situés à l'extérieur dudit système.

4. Système de connexion mécanique et électrique selon la revendication 1, caractérisé en ce que le dispositif électronique unique monté en série (20, 20A, 20B, 20C, 20D, 20E) comprend une pluralité de prises (80, 80A, 80B, 80C) pour permettre auxdits articles d'équipement électronique reliés les uns aux autres et situés à l'extérieur du système ou à une pluralité desdites fiches (40, 40A) ou à au moins un ensemble desdits articles d'équipement électronique et desdites fiches (40, 40A) d'être utilisés simultanément.

5. Système de connexion mécanique et électrique selon la revendication 1, caractérisé en ce que lesdits articles d'équipement électrique encastrés (30, 30A), lesdites plaques (10, 10A), lesdits dispositifs électroniques montés en série (20, 20A, 20B, 20C, 20D, 20E), lesdites prises (80, 80A, 80B, 80C), lesdites fiches (40, 40A) et lesdits autres dispositifs électroniques (50, 50A) de fonction spécifique sont d'autres articles d'équipement de type modulaire à usage domestique.
